(19) Europäisches Patentamt
European Patent Office
Office européen des brevets

(11) **EP 1 606 763 B1**

(12) **EUROPÄISCHE PATENTSCHRIFT**

(45) Veröffentlichungstag und Bekanntmachung des Hinweises auf die Patenterteilung:
**23.05.2007 Patentblatt 2007/21**

(21) Anmeldenummer: **04718944.4**

(22) Anmeldetag: **10.03.2004**

(51) Int Cl.:
*G06K 9/38* (2006.01)    *G06K 9/20* (2006.01)

(86) Internationale Anmeldenummer:
**PCT/EP2004/002465**

(87) Internationale Veröffentlichungsnummer:
**WO 2004/084122 (30.09.2004 Gazette 2004/40)**

(54) **VERFAHREN UND EINRICHTUNG ZUM VERARBEITEN DER FARBINFORMATION EINER MIT ST RZEICHEN UND NUTZZEICHEN VERSEHENEN VORLAGE**

METHOD AND DEVICE FOR PROCESSING COLOUR INFORMATION OF A PATTERN HAVING CLUTTERED AND USEFUL INFORMATION CHARACTERS

PROCEDE ET DISPOSITIF POUR TRAITER LES INFORMATIONS CHROMATIQUES D'UN MODELE COMPRENANT DES CARACTERES PARASITES ET DES CARACTERES UTILES

(84) Benannte Vertragsstaaten:
**BE DE GB NL**

(30) Priorität: **17.03.2003 DE 10311700**

(43) Veröffentlichungstag der Anmeldung:
**21.12.2005 Patentblatt 2005/51**

(73) Patentinhaber: **Oce Document Technologies Gmbh**
**78467 Konstanz (DE)**

(72) Erfinder: **HUND, Martin**
**78476 Allensbach (DE)**

(74) Vertreter: **Schaumburg, Thoenes, Thurn, Landskron**
**Postfach 86 07 48**
**D-81634 München (DE)**

(56) Entgegenhaltungen:
**WO-A-01/11547          DE-A- 4 202 579**
**US-A- 5 014 328        US-A- 5 014 329**
**US-B1- 6 473 522**

• **SCHETTINI R ED - VANDEWALLE J ET AL: "LOW-LEVEL SEGMENTATION OF COMPLEX COLOR IMAGES" SIGNAL PROCESSING THEORIES AND APPLICATIONS. BRUSSELS, AUG. 24 - 27, 1992, PROCEEDINGS OF THE EUROPEAN SIGNAL PROCESSING CONFERENCE (EUSIPCO), AMSTERDAM, ELSEVIER, NL, Bd. VOL. 1 CONF. 6, 24. August 1992 (1992-08-24), Seiten 535-538, XP000348717 ISBN: 0-444-89587-6**

EP 1 606 763 B1

**Beschreibung**

Aus dem Stand der Technik sind Verfahren zur automatischen Zeichenerkennung bekannt, mit denen die in einer Vorlage, zum Beispiel einem Formular, in Form von Nutzzeichen enthaltene Nutzinformation gewonnen wird. Solche Verfahren sind beispielsweise unter der Bezeichnung ICR und OCR bekannt. ICR steht hierbei für "intelligent character recognition" und OCR für "optical character recognition".

Bevor die eigentliche Zeichenerkennung durchgeführt werden kann, muss in der Regel zuvor eine Trennung zwischen Nutzinformation und Störinformation vorgenommen werden. Diese Trennung ist zur Unterdrückung störender Bildpunkte erforderlich, die ansonsten zu viele Fehler in der Zeichenerkennung verursachen würden. Als Störinformation gilt dabei jede Information auf der Vorlage, die nicht der Nutzinformation zuzuordnen ist. So sind zum Beispiel Formulare üblicherweise mit Formularfeldern versehen, die Ausfüllhinweise wie Name, Adresse etc. enthalten. Die Formularfelder, die häufig durch einen farbigen Rahmen markiert sind, und die Ausfüllhinweise bilden in diesem Fall Störzeichen, die eine von der Nutzinformation zu trennende Störinfnrmation beinhalten.

In der Regel sind die Formularfelder und die Ausfüllhinweise in einer für den Benutzer auffälligen Farbe, zum Beispiel grün, gedruckt. Um aus einem solchen Formular die Nutzinformation zu gewinnen, die in diesem Fall durch die von dem Benutzer mit einem Schreibstift oder einer Schreibmaschine eingetragenen Zeichen gegeben ist, muss zunächst die Störinformation unterdrückt werden, um anschließend die Nutzinformation erkennen zu können.

In besonders einfach gelagerten Fällen, in denen beispielsweise dunkle Schrift von einem hellen Hintergrund zu trennen ist, kann die Störinformation durch eine Binärwertbildung unterdrückt werden. Dabei werden denjenigen Bildpunkten des digitalen Bildes der Vorlage, die dem hellen Hintergrund zugeordnet sind, ein erster Binärwert und denjenigen Bildpunkten, die der dunklen Schrift zugeordnet sind, ein zweiter Binärwert zugeordnet.

Ein solches Verfahren arbeitet jedoch nicht zuverlässig, wenn der Hintergrund farbig bedruckt ist, wie dies bei den oben beschriebenen, mit farbigen Formularfeldern und farbigen Ausfüllhinweisen versehenen Formularen der Fall ist. Erschwerend kommt hinzu, dass in der Regel die Farbe, die zum Ausfüllen der Formulare verwendet wird, nicht bekannt ist.

Aus dem Stand der Technik sind verschiedene Verfahren bekannt, mit denen in einem vorverarbeitenden Schritt bekannte Hintergrundfarben, das heißt bei den oben beschriebenen Formularen die Farben der Formularfelder, die Farben der Ausfüllhinweise sowie die Farbe des für die Formulare verwendeten Papiers, vor der Binärwertbildung und der anschließenden Zeichenerkennung unterdrückt werden können. Diese auch als Farbfilterungsverfahren bezeichneten Verfahren beruhen auf einem im Vorfeld berechneten Farbfilter. Ein solches Farbfilter muss jedoch durch ein geeignetes Verfahren "trainiert" oder "belehrt" werden. Dies bedeutet, dass vor der eigentlichen Farbfilterung die Filtereigenschaften aufgrund einer repräsentativen Auswahl von Formularen so festgelegt werden müssen, dass die anschließende Farbfilterung auch dann zuverlässig arbeitet, wenn die zu verarbeitenden Formulare Unterschiede hinsichtlich Farbton, Helligkeit und Sättigung aufweisen.

Die vorstehend beschriebenen Verfahren versagen jedoch, wenn eine Farbfilterung zum Beispiel an einem Stapel von Formularen vorgenommen werden soll, von denen eines blaue Ausfüllhinweise und rote Nutzzeichen aufweist, während bei einem anderen genau umgekehrte Farbverhältnisse vorliegen, das heißt rote Ausfüllhinweise und blaue Nutzzeichen vorgesehen sind. Diese Verfahren eignen sich demnach nicht für Anwendungen, in denen die Farben der Nutzzeichen und der Störzeichen nicht schon im wesentlichen bekannt sind und in denen kein bekanntes Kontrastverhältnis von Nutzzeichen zu Störzeichen vorausgesetzt werden kann. Es ist also nicht möglich, mit diesen Verfahren bei einer unbekannten Farbzusammensetzung des zu verarbeitenden Formulars eine Trennung von Nutzinformation und Störinformation vorzunehmen.

Zum Stand der Technik wird auf die Druckschrift DE 42 02 579 verwiesen. Dort ist ein Farbfilterungsverfahren beschrieben, bei dem für ein aus Bildpunkten bestehendes digitales Bild eine Transformation von dem Farbraum RGB in den Farbraum HSI vorgenommen wird. Ein Detektor vergleicht die Sättigungswerte der Bildpunkte mit einem Schwellenwert. Der Detektor bildet einen Lauflängendetektor, der eine kontinuierliche Bitfolge erfasst, deren Sättigungswerte über dem Schwellenwert liegen. Sobald N Pixel nacheinander eine über dem Schwellenwert liegende Sättigung aufweisen, d.h. ein kontinuierlicher Zeilenabschnitt mit einer Mindestsättigung vorliegt, wird davon ausgegangen, dass diese N Pixel eine Formularfarbe repräsentieren. Dies beruht offenbar auf der Erkenntnis, dass solch kontinuierliche Zeilenabschnitte nur in Vorlagenbereichen auftreten, in denen keine Schriftzeichen vorhanden sind (sondern nur Formularhintergrund). Ein Puffer empfängt das HSI-Signal, so dass neben den Sättigungswerten des vorstehend genannten Zeilenabschnitts nun auch die Farbtonwerte und die Helligkeitswerte dieses Abschnitts zur Weiterverarbeitung bereitgestellt werden. In einer Schaltung wird dann eine nicht näher erläuterte Histogrammberechnung vorgenommen. Schließlich werden in einem Generator denjenigen Farben, die durch den Detektor, den Puffer und die vorstehend genannte Schaltung ermittelt werden, anhand von Varianzbetrachtungen weitere Farben hinzugefügt, um die Klasse der Formularfarben zu vervollständigen.

Zum Stand der Technik wird ferner auf die Druckschriften WO 01/11547 A, US 5,014,328 A, US 6,473,522 B1, US 5,014,329 A, Schettini R ED - Vandewalle J et al: "LOW-LEVEL SEGMENTATION OF COMPLEX COLOR IMAGES", Signal Processing Theories and Applications, Brussels, Aug. 24 - 27, 1997, Proceedings of the European signal processing conference (EUSIPCO), Amsterdam, Elsevier, NL, Bd. Vol. 1 Conf.6, 24. August 1992, Seiten 535-538, XP000348717 (ISBN: 0-444-89587-6), DE 198 28 396 A1, DE 198 45 996 A1, DE 44 45 386 C1, EP 0 576 704 A1, US 2002/0118883 A1, "RecoStar Color Professional Plus bringt Farbe ins Spiel", Oce Document Technologies 3/01-500-B, hingewiesen.

Aufgabe der Erfindung ist es, ein Verfahren und eine Einrichtung zum Verarbeiten der Farbinformation einer mit Störzeichen und Nutzzeichen versehenen Vorlage anzugeben, die es ermöglichen, die durch die Störzeichen gegebene Störinformation wirksam zu unterdrücken.

Die Erfindung löst diese Aufgabe durch das Verfahren mit den Merkmalen des Anspruchs 1 und durch die Einrichtung mit den Merkmalen des Anspruchs 14. Vorteilhafte Weiterbildungen sind in den Unteransprüchen angegeben.

Das erfindungsgemäße Verfahren sieht vor, die Farbinformation auf Grundlage der Helligkeit, der Sättigung und des Farbtons zu verarbeiten. Dabei ist die Verarbeitung nicht auf einen bestimmten Farbraum beschränkt. Für das Verfahren geeignete Farbräume sind zum Beispiel die bekannten Räume LAB, HSI und RGB. In all diesen Farbräumen können farbbestimmende Kenngrößen angegeben werden, die der Helligkeit, der Sättigung und dem Farbton entsprechen.

Das Verfahren nach der Erfindung ermöglicht es, auch solche Vorlagen automatisch zu verarbeiten, bei denen weder die Farben der Störzeichen und der Nutzzeichen noch deren Farbkonstrastverhältnis bekannt sind. Für die erfolgreiche Durchführung des Verfahrens reicht es aus, dass die Nutzzeichen und die Störzeichen einen Unterschied hinsichtlich der farbbestimmenden Kenngröße Helligkeit aufweisen. Ist dies gegeben, so kann das Verfahren auf jede einzelne zu verarbeitende Vorlage angewendet werden, um eigens für diese Vorlage zu ermitteln, welche Farben als Störinformation zu unterdrücken sind.

Eine Vorabkenntnis darüber, welche Farben für einen Vorlagentyp repräsentativ sind, erfordert das Verfahren nicht. Verglichen mit dem oben beschriebenen bekannten Farbfilterungsverfahren, bei dem schon alle vorab bekannten Unterschiede der zu verarbeitenden Vorlagen hinsichtlich Farbton, Helligkeit und Sättigung in die Ermittlung der Filtereigenschaften einfließen müssen, liefert das erfindungsgemäße Verfahren eine sehr viel präzisere Farbinformation über die Vorlage, die zur Unterdrückung der auf die Störzeichen bezogenen Farben genutzt werden kann. Insbesondere sieht die Erfindung eine besonders effiziente Verarbeitung der Farbinformation vor.

Das vorgeschlagene Verfahren ist vorteilhaft in der automatischen Zeichenerkennung, zum Beispiel einem ICR- oder OCR-Verfahren anwendbar. In dieser Anwendung wird das Verfahren vor der eigentlichen Zeichenerkennung durchgeführt, um die in der Vorlage enthaltene Störinformation zu unterdrücken. Die Erfindung ist insbesondere auf das in der WO 01/77998 A1 beschriebene Verfahren anwendbar, das auf den Erfinder des hier vorgestellten Verfahrens zurückgeht.

Das Verfahren nach Anspruch 1 ist jedoch auf die vorstehend angegebene Anwendung nicht beschränkt. Es eignet sich für alle Anwendungen, in denen die durch das Verfahren verarbeite Farbinformation genutzt werden kann. Beispielsweise kann das Verfahren eingesetzt werden, um die Filtereigenschaften eines in einem bekannten Farbfilterungsverfahren verwendeten Filters festzulegen.

Zum besseren Verständnis der vorliegenden Erfindung wird im folgenden auf das in den Zeichnungen dargestellte Ausführungsbeispiel verwiesen. Es sei darauf hingewiesen, dass der Schutzumfang der Erfindung dadurch nicht eingeschränkt werden soll, da derartige Veränderungen und weitere Modifizierungen an dem gezeigten Verfahren sowie derartige weitere Anwendungen der Erfindung, wie sie darin aufgezeigt sind, als übliches derzeitiges oder künftiges Fachwissen eines zuständigen Fachmannes angesehen werden.

Die Figuren zeigen ein Ausführungsbeispiele der Erfindung, nämlich

Figur 1      ein Flussdiagramm eines erfindungsgemäßen Verfahrens zum Verarbeiten der Farbinformation einer Vorlage,

Figur 2      ein Diagramm mit Häufigkeitsverteilungen von Helligkeitswerten, Sättigungswerten und Farbtonwerten, und

Figur 3      ein Flussdiagramm, das zeigt, wie mit dem erfindungsgemäßen Verfahren die Filtereigenschaften eines Farbfilters festgelegt werden.

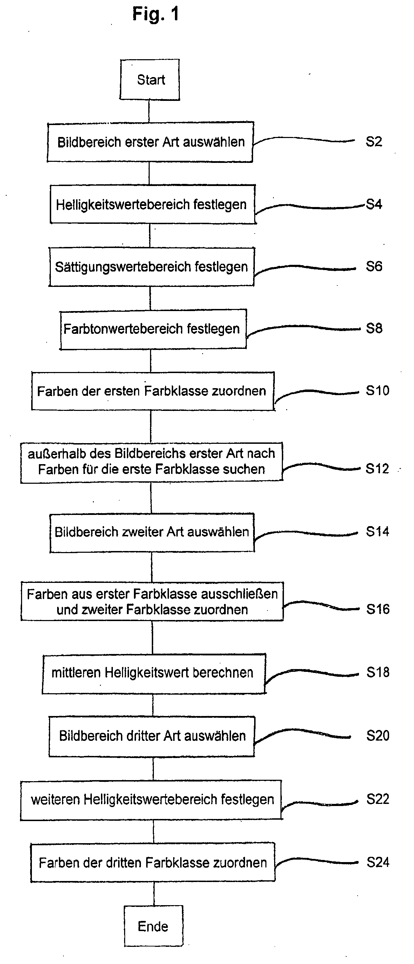

In dem in Figur 1 gezeigten Ausführungsbeispiel des erfindungsgemäßen Verfahrens wird die Farbinformation einer Vorlage verarbeitet, die Störzeichen und Nutzzeichen enthält.

Die Vorlage ist beispielsweise ein übliches Formular aus Papier, bei dem Ausfüllhinweise enthaltende Formularfelder vorgesehen sind. In diese Formularfelder trägt der Benutzer des Formulars beispielsweise mit einem Schreibstift oder einer Schreibmaschine Zeichen ein, die zum Beispiel seinen Namen, seine Adresse oder dergleichen angeben. Damit der Benutzer auf die Formularfelder und die in ihnen enthaltenen Ausfüllhinweise aufmerksam wird, haben die Formularfelder und die Ausfüllhinweise jeweils eine beliebige Farbe. Beispielsweise sind die Formularfelder in einem hellen Grün und die Ausfüllhinweise in einem dunklen Grün gehalten. Auch die Farbe der vom Benutzer in die Formularfelder einzutragenden Zeichen ist beliebig, zum Beispiel rot oder blau.

Damit das Formular in einem Verfahren zur automatischen Zeichenerkennung, zum Beispiel einem ICR-Verfahren oder einem OCR-Verfahren, verarbeitet werden kann, muss in einem vorverarbeitenden Schritt zunächst die in dem Formular vorhandene Nutzinformation von der in dem Formular vorhandenen Störinformation getrennt werden. In dem vorliegenden Ausführungsbeispiel werden die Formularfelder und die in ihnen enthaltenen Ausfüllhinweise als Störinformation beinhaltende Störzeichen und die von dem Benutzer auf dem Formular eingetragenen Zeichen als Nutzinformation beinhaltende Nutzzeichen aufgefasst.

Mit dem in Fig. 1 gezeigten Verfahren werden im Ergebnis bis zu drei Farbklassen erzeugt. Einer ersten Farbklasse werden diejenigen Farben zugeordnet, die in den Störzeichen auftreten. Einer zweiten Farbklasse werden diejenigen Farben zugeordnet, die in dem zeichenlosen Formular auftreten, d.h. die Farben des Formularpapier selbst ohne Störzeichen und Nutzzeichen. Schließlich werden einer dritten Farbklasse diejenigen Farben zugeordnet, die in den Nutzzeichen auftreten.

In dem in Fig. 1 gezeigten Verfahren wird ein digitales Bild verarbeitet, das in an sich bekannter Weise durch Analog-Digital-Wandlung erzeugt wird. Dieses digitale Bild besteht aus Bildpunkten, denen jeweils ein Helligkeitswert, ein Sättigungswert und ein Farbtonwert zugeordnet sind. Durch die drei farbbestimmenden Kenngrößen Helligkeit, Sättigung und Farbton ist ein Farbraum festgelegt, innerhalb dessen sich jede beliebige Farbe darstellen läßt. Es ist jedoch darauf hinzuweisen, dass das erfindungsgemäße Verfahren auf beliebige Farbräume anwendbar ist, zum Beispiel auf den LAB-Farbraum, den HSI-Farbraum, den RGB-Farbraum etc.

Nach dem Start des Verfahrens wird in Schritt S2 ein Bereich des digitalen Bildes ausgewählt, der einem Bereich des Formulars entspricht, der Störzeichen, aber keine Nutzzeichen enthält. Dieser Verfahrensschritt beruht auf der Erkenntnis, dass es in jedem Formular typischerweise Bereiche gibt, in denen keine Nutzzeichen, wohl aber Störzeichen und unbedrucktes Papier vorkommen. Beispielsweise ist ein solcher Bereich durch ein weitgehend vollständig mit Ausfüllhinweisen bedrucktes Formularfeld gegeben, in das der Benutzer mit hoher Wahrscheinlichkeit keine Nutzzeichen einträgt. Der in Schritt S2 ausgewählte Bereich des digitalen Bildes wird im folgenden als Bildbereich erster Art bezeichnet.

In Schritt S4 wird auf Grundlage der Helligkeitswerte der Bildpunkte des ausgewählten Bildbereichs erster Art ein Helligkeitswertebereich festgelegt. Die Festlegung des Helligkeitswertebereichs erfolgt dabei so, dass letzterer die Helligkeitswerte der auf die Störzeichen bezogenen Bildpunkte des Bildbereichs erster Art enthält. Zu diesem Zweck werden zunächst der größte Helligkeitswert Hmax und der kleinste Helligkeitswert Hmin der in dem Bildbereich erster Art enthaltenen Bildpunkte ermittelt. Dabei kommt es nur auf die Werte selbst, nicht aber auf die Orte der Bildpunkte an; in denen diese Werte auftreten. Unter Berücksichtigung des maximalen Helligkeitswertes Hmax und des minimalen Helligkeitswertes Hmin wird nun der vorstehend genannte Helligkeitswertebereich festgelegt, und zwar nach der folgenden Bedingung (1):

$$(1) \quad 0 < H < Hmax - \frac{Hmax - Hmin}{k},$$

worin H die Helligkeitswerte und k eine natürliche Zahl ungleich Null bezeichnet. Ein geeigneter Wert von k ist beispielsweise 4.

Durch die geeignete Wahl des Helligkeitswertebereichs gemäß Bedingung (1) kann von denjenigen Bildpunkten des Bildbereichs erster Art, deren Helligkeitswerte die Bedingung (1) erfüllen, mit hoher Wahrscheinlichkeit angenommen werden, dass sie auf die Störzeichen, d.h. in diesem Ausführungsbeispiel auf die Formularfelder und die darin enthaltenen Ausfüllhinweise, bezogen sind. Durch die Bedingung (1) ist demnach ein erster Anhaltspunkt für die möglichen Farben gegeben, die die in dem Formular vorhandenen Störzeichen aufweisen.

Durch die Festlegung des Helligkeitswertebereichs gemäß Bedingung (1) ist unmittelbar ein dazu komplementärer Helligkeitswertebereich festgelegt, der durch folgenden Bedingung (1) gegeben ist:

$$(\overline{1}) \quad H > Hmax - \frac{Hmax - Hmin}{k}$$

Von denjenigen Bildpunkten, deren Helligkeitswerte in dem durch die Bedingung (1) festgelegten Helligkeitswertebereich liegen, kann angenommen werden, dass sie Farben aufweisen, die dem zeichenlosen Formular, d.h. dem unbedruckten Formularpapier zuzuordnen sind.

In Schritt S6 wird für die Sättigungswerte derjenigen Bildpunkte des Bildbereichs erster Art, deren Helligkeitswert in dem durch die Bedingung (1) festgelegten Helligkeitswertebereich liegen, eine Häufigkeitsverteilung ermittelt, die angibt, mit welcher Häufigkeit diese Sättigungswerte in dem Bildbereich erster Art auftreten. Der Wertebereich dieser Häufigkeitsverteilung wird vorzugsweise in einer vorbestimmten Anzahl von m von Stufen quantisiert. Liegen beispielsweise die möglichen Sättigungswerte in einem Bereich von 0 bis 255, so gibt m = 10 eine geeignete Anzahl von Quantisierungsstufen an. Um den möglicherweise verfälschenden Einfluss nur selten auftretender Sättigungswerte zu unterdrücken, wird die ermittelte Häufigkeitsverteilung durch eine geeignete Normierungskonstante, zum Beispiel den Wert 100, dividiert.

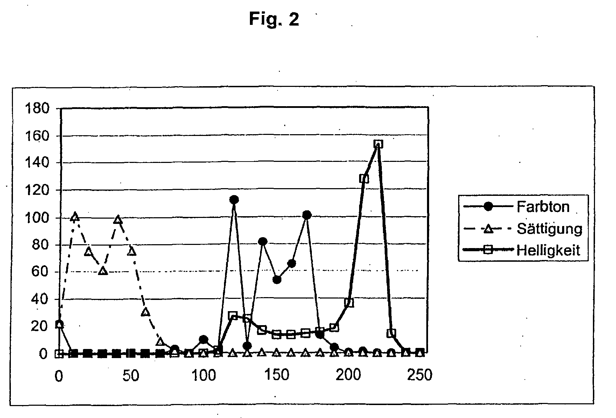

In Fig. 2 ist die so ermittelte Häufigkeitsverteilung der Sättigungswerte dargestellt. In dem Diagramm nach Fig. 2 sind auf der Abszisse die möglichen Sättigungswerte 0 bis 255 und auf der Ordinate die zu den jeweiligen Sättigungswerten gehörigen Häufigkeitswerte aufgetragen. Die gezeigten Häufigkeitswerte sind dabei schon durch die oben genannte Normierungskonstante 100 dividiert.

Aus der in Fig. 2 gezeigten Häufigkeitsverteilung der Sättigungswerte wird nun ein Sättigungswertebereich festgelegt. In diesem Ausführungsbeispiel wird der Sättigungswertebereich so festgelegt, dass er nur Sättigungswerte enthält, deren ermittelte Häufigkeit den Wert 0 übersteigt. Wie der Fig. 2 zu entnehmen ist, ist dies der Bereich, der von dem Sättigungswert 0 bis etwa zu dem Sättigungswert 70 reicht.

In Schritt S8 wird für die Farbtonwerte derjenigen Bildpunkte des Bildbereichs erster Art, deren Helligkeitswert in dem durch die Bedingung (1) festgelegten Helligkeitswertebereich liegen, eine Häufigkeitsverteilung ermittelt, die angibt, mit welcher Häufigkeit diese Farbtonwerte in dem Bildbereich erster Art auftreten.

Hierzu wird nochmals auf Fig. 2 Bezug genommen, in der neben der Häufigkeitsverteilung der Sättigungswerte auch die Häufigkeitsverteilung der Farbtonwerte und eine Häufigkeitsverteilung der Helligkeitswerte dargestellt sind. Die beiden zuletzt genannten Häufigkeitsverteilungen können gleichzeitig mit der Ermittlung der Häufigkeitsverteilung der Sättigungswerte schon in Schritt S6 bestimmt werden, und zwar unter den dort beschriebenen numerischen Vorgaben, d.h. mit m = 10, einem jeweils verfügbaren Wertebereich von 0 bis 255 und einer Division durch die Normierungskonstante 100. Die ermittelten Häufigkeitsverteilungen nach Fig. 2 geben so eine vollständige Information darüber, wie häufig die jeweiligen Helligkeitswerte, Sättigungswerte und Farbtonwerte in dem Bildbereich erster Art auftreten.

Auf Grundlage der in Fig. 2 gezeigten Häufigkeitsverteilung der Farbtonwerte wird nun ein Farbtonwertebereich festgelegt. In diesem Ausführungsbeispiel wird der Farbtonwertebereich so festgelegt, dass er nur Farbtonwerte enthält, deren ermittelte Häufigkeit den Wert 0 übersteigt. Wie der Fig. 2 zu entnehmen ist, ist dies der Bereich, der etwa von dem Farbtonwert 90 bis etwa zu dem Farbtonwert 190 reicht.

In den Schritten S4 bis S8 werden demnach drei Wertebereiche für die farbbestimmenden Kenngrößen Helligkeit, Sättigung und Farbton festgelegt, die auf die Störzeichen des Formulars bezogen sind. Auf Grundlage dieser drei Wertebereiche können die in dem Bildbereich erster Art auftretenden und auf die Störzeichen bezogenen Farben der oben genannten ersten Farbklasse zugeordnet werden. Dies geschieht in Schritt S10. Dort werden also die Farben derjenigen Bildpunkte des Bildbereichs erster Art, deren Helligkeitswerte in dem in Schritt S4 gemäß Bedingung (1) festgelegten Helligkeitswertebereich, deren Sättigungswerte in dem in Schritt S6 festgelegten Sättigungswertebereich und deren Farbtonwerte in dem in Schritt S8 festgelegten Farbtonwertebereich liegen, der ersten Farbklasse zugeordnet.

Nachdem Schritt S10 durchgeführt ist, sind alle Farben, welche die Störzeichen in dem Bildbereich erster Art aufweisen, bekannt und der ersten Farbklasse zugeordnet. Um weitere Farben von in dem Formular auftretenden Störzeichen zu ermitteln und der ersten Farbklasse zuzuordnen, können weitere Bildbereiche erster Art ausgewählt und die Schritte S4 bis S10 jeweils auf diese Bereiche angewendet werden. Dadurch wird die erste Farbklasse zuverlässiger als mit nur einem einzigen Bildbereich erster Art festgelegt. Jedoch kann bei farblich einfach gestalteten Formularen die Berücksichtigung auch nur eines einzigen Bildbereichs erster Art durchaus ausreichend sein, um die erste Farbklasse zuverlässig festzulegen. Insbesondere ist darauf hinzuweisen, dass für das erfindungsgemäße Verfahren in seiner einfachsten Realisierung nur die jeweils einmal ausgeführten Schritte S2 bis S10 erforderlich sind. Durch die im folgenden beschriebenen weiteren Schritte wird jedoch nach und nach weitere Farbinformation gewonnen, die beispielsweise in einem Verfahren zur automatischen Zeichenerkennung gewinnbringend genutzt werden kann.

In Schritt S12 werden außerhalb des Bildbereichs erster Art Bildpunkte ermittelt, deren Helligkeitswerte in dem in Schritt S4 festgelegten Helligkeitswertebereich, deren Sättigungswerte in dem in Schritt S6 festgelegten Sättigungswertebereich und deren Farbtonwerte in dem Schritt S8 festgelegten Farbtonwertebereich liegen. Die Farben der auf diese Weise ermittelten Bildpunkte werden dann der ersten Farbklasse zugeordnet. In Schritt S12 kann so auf dem gesamten Formular nach Farben gesucht werden, die auf die Störzeichen bezogen sind. Dadurch wird die erste Farbklasse weiter vervollständigt.

In Schritt S14 wird ein Bereich des digitalen Bildes ausgewählt, der einem Bereich des Formulars entspricht, der weder Störzeichen noch Nutzzeichen enthält. Diese Maßnahme beruht auf der Erkenntnis, dass in nahezu jedem Formular Bereiche vorhanden sind, die gänzlich unbedruckt sind. Dies sind in der Regel streifenförmige Bereiche, die sich längs des gesamten Randes oder auch nur längs eines der beiden seitlichen Ränder erstrecken. Der in Schritt S14 ausgewählte Bereich des digitalen Bildes, der einem solchen Bereich des Formulars entspricht, wird im folgenden als Bildbereich zweiter Art bezeichnet.

In Schritt S16 werden die Farben derjenigen Bildpunkte des Bildbereichs zweiter Art, deren Helligkeitswerte in dem in Schritt S4 festgelegten Helligkeitswertebereich liegen, deren Sättigungswerte in dem in Schritt S6 festgelegten Sättigungswertebereich liegen und deren Farbtonwerte in dem in Schritt S8 festgelegten Farbtonwertebereich liegen, aus der ersten Farbklasse ausgeschlossen und der zweiten Farbklasse zugeordnet. In Schritt S16 wird also die erste Farbklasse eingeschränkt, indem aus dieser Farbklasse beispielsweise Farben ausgeschlossen werden, die ihr zuvor irrtümlicherweise zugeordnet worden sind, und zugleich wird die zweite Farbklasse aufgebaut.

Nach Schritt S16 ist also die aus dem Formular gewonnene Farbinformation zwei Farbklassen zugeordnet, von denen die erste die auf die Störzeichen bezogenen Farben und die zweite die auf das zeichenlose Formular, d.h. das Formularpapier selbst bezogenen Farben beinhaltet. Die beiden Farbklassen können die Grundlage einer Farbfilterung bilden, durch die die durch die Störzeichen verkörperte Störinformation unterdrückt wird, um an die durch die Nutzzeichen verkörperte Nutzinformation zu gelangen.

Entsprechend der oben beschriebenen, auf die Bildbereiche erster Art bezogenen Vorgehensweise können auch mehrere Bildbereiche zweiter Art ausgewählt werden und die Schritte S14 und S16 jeweils auf diese Bereiche angewendet werden. Dadurch wird eine noch zuverlässigere Festlegung der ersten und der zweiten Farbklasse erreicht.

Die im folgenden beschriebenen Schritte dienen der Erzeugung der dritten Farbklasse, welche die auf die Nutzzeichen bezogenen Farben enthält. Wie oben erläutert, ist es schon mit der ersten Farbklasse allein, insbesondere aber zusätzlich mit der zweiten Farbklasse möglich, die Störinformation wirksam zu unterdrücken, um so an die Nutzinformation zu gelangen. Es kommt jedoch häufig vor, dass ein Formular neben den oben beschriebenen Stör- und Nutzzeichen, d.h. beispielsweise den Formularfeldern, den in diesen enthaltenen Ausfüllhinweisen und den von dem Benutzer vorgenommenen Eintragungen, weitere Farbinformation enthält, die keine Nutzinformation darstellt.

So weisen Formulare häufig verschmutzte, bestempelte oder verschmierte Bereiche auf. Solche Bereiche entstehen insbesondere bei der Verwendung von farbigen Kohledurchschlägen oder beim Stapeln der Formulare mit anderen abfärbenden Papieren. Außerdem werden die Formulare häufig unsauber ausgefüllt und über die zur Beschriftung vorgesehenen Formularfelder hinaus beschriftet. Um zu vermeiden, dass die vorstehend beschriebenen Umstände die Verarbeitung der Farbinformation erschweren, sind in diesem Ausführungsbeispiel die Schritte S18 bis S24 vorgesehen. Mit diesen Schritten wird die dritte Farbklasse erzeugt, welche die auf die Nutzzeichen bezogenen Farben beinhaltet. Durch die Kenntnis dieser Farben kann in Grenzfällen, zum Beispiel beim Auftreten von Mischfarben, noch zuverlässiger zwischen Nutz- und Störinformation unterschieden werden.

In Schritt S18 wird ein mittlerer Helligkeitswert derjenigen Bildpunkte ermittelt, die in dem in Schritt S14 ausgewählten Bildbereich zweiter Art enthalten sind. Dieser mittlere Helligkeitswert wird in dem später beschriebenen Schritt S22 verwendet.

In Schritt S20 wird ein Bereich des digitalen Bildes ausgewählt, der einem Bereich des Formulars entspricht, in dem Nutzzeichen, aber keine Störzeichen vorhanden sind. Typischerweise gibt es in einem Formular stets Bereiche, in denen Nutzzeichen, aber keine Störzeichen, d.h. Formularfelder und Ausfüllhinweise zu finden sind. Diese Nutzzeichen befinden sich also in einem ansonsten zeichenlosen Formularbereich. Der in Schritt S20 ausgewählte Bereich des digitalen Bildes entspricht einem solchen Formularbereich und wird im folgenden als Bildbereich dritter Art bezeichnet.

Auf Grundlage des in Schritt S18 ermittelten mittleren Helligkeitswertes wird in Schritt S22 ein Helligkeitswertebereich nach folgender Bedingung (2) festgelegt:

$$(2) \quad H < H_{MITTEL} - q$$

worin H die Helligkeitswerte, $H_{MITTEL}$ den mittleren Helligkeitswerte und q einen von dem mittleren Helligkeitswert abhängige Größe bezeichnet.

Vorzugsweise erfüllt die Größe q folgende Beziehung (3)

$$(3) \quad q = 0,1 \cdot H_{MITTEL}$$

In Schritt S24 werden die Farben derjenigen Bildpunkte des Bildbereichs dritter Art, die nicht der ersten Farbklasse zugeordnet sind und die in dem durch die Beziehung (3) angegebenen Helligkeitswertebereich liegen, der dritten Farbklasse zugeordnet, welche die auf die Nutzzeichen bezogenen Farben beinhaltet. Nach Schritt S24 endet das in dem Flussdiagramm nach Fig. 1 dargestellte Verfahren.

Wie schon für die Bildbereiche erster und zweiter Art beschrieben, können auch für den Bildbereich dritter Art mehrere Bereiche ausgewählt und diese Bereich nacheinander gemäß den Schritten S20 bis S24 verarbeitet werden. Dadurch kann die dritte Farbklasse noch zuverlässiger erzeugt werden.

Bei dem unter Bezugnahme auf die Figuren 1 und 2 beschriebenen Ausführungsbeispiel des erfindungsgemäßen Verfahrens werden ausgehend von einer hinsichtlich Papierfarbe, Farbe der Störzeichen und Farbe der Nutzzeichen beliebig farbigen Vorlage sukzessive die erste, die zweite und die dritte Farbklasse und damit mehr und mehr Farbinformation gewonnen, d.h. gleichsam erlernt. Für die Vorlage kann demnach unter Zugrundelegung eines beliebigen Farbraums eine Farbklassifizierung in die genannten drei Farbklassen vorgenommen werden.

Diese Klassifizierung kann die Grundlage für ein beliebiges Farbfilterungsverfahren bilden. Dabei wird das Verfahren für jede Vorlage neu gestartet. Das Verfahren erzeugt dann für jede Vorlage die drei Farbklassen, und zwar ohne Unschärfen, die bei aus dem Stand der Technik bekannten Verfahren dadurch auftreten, dass bei der Filterberechnung eine Reihe von unterschiedlichen Farbvarianzen einberechnet werden müssen. Auch ist es bei einer Verarbeitung eines aus mehreren Vorlagen bestehenden Stapels nicht erforderlich, die Vorlagen in einer vorbestimmten Reihenfolge zu sortieren, damit bei dem erfindungsgemäßen Verfahren auch Fälle automatisch gehandhabt werden können, die hinsichtlich der Farben von Nutzzeichen und Störzeichen konträr zueinander sind. Ein solcher Fall ist beispielsweise dann gegeben, wenn in einer Vorlage die Nutzzeichen rot und die Störzeichen blau und in einer anderen Vorlage die Nutzzeichen blau und die Störzeichen rot sind.

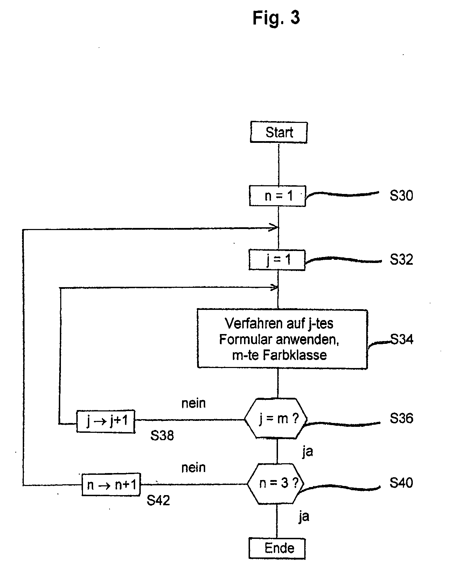

Das erfindungsgemäße Verfahren zum Verarbeiten der Farbinformation kann auch dazu eingesetzt werden, um in einem automatischen Prozess die Filtereigenschaften eines in einem üblichen Farbfilterungsverfahren verwendbaren Filters auf Grundlage eines aus mehreren Vorlagen bestehenden Referenzstapels zu ermitteln. Dieser Sachverhalt wird im folgenden unter Bezugnahme auf Fig. 3 beschrieben.

Im folgenden wird angenommen, dass das in dem Flussdiagramm nach Fig. 1 dargestellte Verfahren auf mehrere Formulare angewendet wird, die jeweils mit Störzeichen und Nutzzeichen versehen sind. Dabei können die Farben der Störzeichen und der Nutzzeichen sowie des Papiers, aus dem die Formulare bestehen, beliebig unterschiedlich sein. Die Anzahl der in dem Stapel vorhandenen Formulare soll m betragen. Die drei Farbklassen sind in Fig. 3 mit einer Zählvariablen n und die Formulare mit einer Zählvariablen j nummeriert.

Nach Start des in Fig. 3 gezeigten Prozesses wird in Schritt S30 die Zählvariable n auf 1 gesetzt. Anschließend wird in Schritt S32 die Zählvariable j auf 1 gesetzt. Dann wird in Schritt S34 das Verfahren nach Fig. 1 auf das erste Formular (j = 1) angewendet. Die dadurch ermittelten Farben werden der ersten Farbklasse (n = 1) zugeordnet. In Schritt S36 wird überprüft, ob die Zählvariable j gleich dem Wert m, d.h. gleich der Anzahl der in dem Stapel vorhandenen Formulare ist. Da dies bei dem ersten Formular nicht der Fall ist, fährt der Prozess mit Schritt S38 fort, in dem die Zählvariable j um 1 erhöht, d.h. auf 2 gesetzt wird. Der Prozess kehrt dann zu Schritt S34 zurück, in dem das Verfahren nach Fig. 1 auf das zweite in dem Stapel vorhandene Formular (j = 2) angewendet wird, wodurch der ersten Farbklasse (n = 1) die auf Grundlage des zweiten Formulars ermittelten Farben hinzugefügt werden.

Die die Schritte S34, S36 und S38 beinhaltende Schleife wird solange durchlaufen, bis in Schritt S36 der Zählvariable j gleich m ist, d.h. auf alle in dem vorhandenen Formulare das Verfahren nach Fig. 1 angewendet worden ist. Durch diese Schleife wird die erste Farbklasse sukzessive um die aus den nacheinander abgearbeiteten Formularen ermittelten Farben ergänzt, die auf die Störzeichen der jeweilige Formulare bezogen sind.

Wird in Schritt S36 festgestellt, dass j gleich m ist, so wird in Schritt S40 überprüft, ob n gleich 3 ist. Da im vorliegenden Fall n gleich 1 ist, wird in Schritt S42 die Zählvariable n um 1 auf 2 erhöht, worauf der Prozess zu Schritt S32 zurückkehrt. In Schritt S32 wird die Zählvariable j wieder auf 1 zurückgesetzt. Durch die durch die Schritte S34, S36 und S38 gebildete Schleife wird nun das Verfahren nach Fig. 1 wieder nacheinander auf alle Formulare angewendet, um die zweite Farbklasse zu erzeugen bzw. diese sukzessive um die Farben zu ergänzen, die auf die zeichenlosen Formulare, d.h. die Formularpapiere selbst ohne Nutz- und Störzeichen, bezogen sind.

Wird dann in Schritt S36 festgestellt, dass die Zählvariable gleich m ist, so ist die zweite Farbklasse vervollständigt. Der Prozess fährt dann mit Schritt S40 fort, in dem überprüft wird, ob der Zählvariable n gleich 3 ist. Da in diesem Fall die Zählvariable n nicht gleich 3, sondern gleich 2 ist, fährt der Prozess mit Schritt S42 fort, in dem die Zählvariable n um 1 erhöht, d.h. auf 3 gesetzt wird. Anschließend springt der Prozess zu Schritt S32 zurück, in dem die Zählvariable j auf 1 gesetzt wird. Der Prozess durchläuft dann zum letzten Mal wiederholt die durch die Schritte S34, S36 und S38 gebildete Schleife. Durch das wiederholte Abarbeiten dieser Schleife wird das Verfahren nach Fig. 1 nacheinander auf die in dem Stapel vorhandenen Formulare angewendet, um die dritte Farbklasse zu erzeugen bzw. diese sukzessive um die Farben zu ergänzen, die auf die Nutzzeichen bezogen sind. Ist das Verfahren in Schritt S34 auf das m-te Formular angewendet worden, so wird in Schritt S36 festgestellt, dass die Zählvariable j gleich m ist. Anschließend wird in Schritt S40 festgestellt, dass die Zählvariable n gleich 3 ist. Damit endet der Prozess.

Durch den in Fig. 3 gezeigten Prozess werden also aus der Farbinformation der in dem Stapel vorhandenen Formulare nacheinander die erste Farbklasse, die zweite Farbklasse und die dritte Farbklasse aufgebaut. Mit diesen Farbklassen können die Filterkenngrößen festgelegt werden, die wiederum die Filtereigenschaften bestimmen. Die Filterkenngrößen können dann in üblicher Weise mit Toleranzen versehen werden.

Der in Fig. 3 gezeigte Prozess ermöglicht es also, automatisch die Filterkenngrößen des Filters zu ermitteln. Dabei ist es nicht erforderlich, wie bei herkömmlichen Verfahren manuell Bildpunkte und Bildbereiche auszuwählen, die den Nutzzeichen bzw. den Störzeichen zugeordnet werden sollen.

Der in Fig. 3 gezeigte Prozess gestattet also eine weitgehend automatische Berechnung eines optimalen Filters, so dass bei der eigentlichen Farbfilterung neuer Vorlagen keine erneute Filterberechnung erforderlich ist. Dadurch wird Rechenzeit eingespart.

Bei dem in Fig. 3 gezeigten Prozess werden alle drei Farbklassen festgelegt (n=1,2,3). Es jedoch ebenso möglich, diesen Prozess nur für die erste Farbklasse (n=1) oder aber für die erste und die zweite Farbklasse (n=1,2) durchzuführen, wenn die damit gegebene Farbinformation für die Festlegung eines effizient arbeitenden Filters ausreicht. Die Zahl der durch den Prozess festzulegenden Filterklassen kann in Abhängigkeit des zu verarbeitenden Vorlagentyps gewählt werden.

Obgleich in den Zeichnungen und in der vorhergehenden Beschreibung bevorzugte Ausführungsbeispiele aufgezeigt und detailliert beschrieben sind, sollte dies als rein beispielhaft und die Erfindung nicht einschränkend angesehen werden. Es wird darauf hingewiesen, dass nur bevorzugte Ausführungsbeispiele dargestellt und beschrieben sind und sämtliche Veränderungen und Modifizierungen, die derzeit und künftig im Schutzumfang der Erfindung liegen, geschützt werden sollen.

**Patentansprüche**

1. Verfahren zum Verarbeiten der Farbinformation einer mit Störzeichen und Nutzzeichen versehenen Vorlage zur Vorbereitung einer Farbfilterung, bei dem

ein digitales Bild der Vorlage erzeugt wird, das aus Bildpunkten besteht, deren Farbe jeweils durch einen Helligkeitswert, einen Sättigungswert und einen Farbtonwert festgelegt ist,

mindestens ein Bildbereich erster Art ausgewählt wird, von dem bekannt ist, dass er einem Bereich der Vorlage entspricht, der Störzeichen, aber keine Nutzzeichen enthält,

auf Grundlage der Helligkeitswerte der Bildpunkte des Bildbereichs erster Art ein Helligkeitswertebereich festgelegt wird, von dem angenommen wird, dass er die Helligkeitswerte der auf die Störzeichen bezogenen Bildpunkte enthält,

für die Sättigungswerte derjenigen Bildpunkte des Bildbereichs erster Art, deren Helligkeitswerte in dem festgelegten Helligkeitswertebereich liegen, jeweils die Häufigkeit ermittelt wird, mit der diese Sättigungswerte in dem Bildbereich erster Art auftreten,

auf Grundlage derjenigen Sättigungswerte, deren ermittelte Häufigkeit einen vorbestimmten Wert übersteigt, ein diese Sättigungswerte enthaltender Sättigungswertebereich festgelegt wird,

für die Farbtonwerte derjenigen Bildpunkte des Bildbereichs erster Art, deren Helligkeitswerte in dem festgelegten Helligkeitswertebereich liegen, jeweils die Häufigkeit ermittelt wird, mit der diese Farbtonwertewerte in dem Bildbereich erster Art auftreten,

auf Grundlage derjenigen Farbtonwerte, deren ermittelte Häufigkeit einen vorbestimmten Wert übersteigt, ein diese Farbtonwerte enthaltender Farbtonwertebereich festgelegt wird,

die Farben derjenigen Bildpunkte des Bildbereichs erster Art, deren Helligkeitswerte in dem festgelegten Helligkeitswertebereich, deren Sättigungswerte in dem festgelegten Sättigungswertebereich und deren Farbtonwerte in dem festgelegten Farbtonwertebereich liegen, einer ersten Farbklasse von auf die Störzeichen bezogenen Farben zugeordnet werden,

die Farben derjenigen Bildpunkte des Bildbereichs erster Art, die nicht der ersten Farbklasse zugeordnet sind, einer zweiten Farbklasse von auf die zeichenlose Vorlage bezogenen Farben zugeordnet werden,

mindestens ein Bildbereich zweiter Art ausgewählt wird, von dem bekannt ist, dass er einem Bereich der Vorlage entspricht, der weder Störzeichen noch Nutzzeichen enthält, und

die Farben derjenigen Bildpunkte des Bildbereichs zweiter Art, deren Helligkeitswerte in dem festgelegten Helligkeitswertebereich liegen, deren Sättigungswerte in dem festgelegten Sättigungswertebereich liegen und deren Farbtonwerte in dem festgelegten Farbtonwertebereich liegen, aus der ersten Farbklasse ausgeschlossen und der zweiten Farbklasse zugeordnet werden.

2. Verfahren nach Anspruch 1, **dadurch gekennzeichnet, dass** der größte Helligkeitswert und der kleinste Helligkeitswert der Bildpunkte des Bildbereichs erster Art ermittelt werden und

der Helligkeitswertebereich so festgelegt wird, dass seine Helligkeitswerte H folgende Bedingungen (1) erfüllen:

$$0 < H < \text{Hmax} - \frac{\text{Hmax} - \text{Hmin}}{k} \qquad (1),$$

worin Hmax den größten Helligkeitswert, Hmin den kleinsten Helligkeitswert und k eine natürliche Zahl ungleich Null bezeichnet.

3. Verfahren nach Anspruch 1 oder 2, **dadurch gekennzeichnet, dass** für die Bildpunkte des Bildbereichs erster Art, deren Helligkeitswerte in dem festgelegten Helligkeitswertebereich liegen, jeweils eine Häufigkeitsverteilung der Helligkeitswerte, der Sättigungswerte und der Farbtonwerte ermittelt werden, welche die Häufigkeit der jeweiligen Werte in dem Bildbereich erster Art angeben, und
die Häufigkeitsverteilungen jeweils in einer vorbestimmten Anzahl von Stufen quantisiert und anschließend durch eine vorbestimmte Normierungskonstante dividiert werden.

4. Verfahren nach einem der vorhergehenden Ansprüche, **dadurch gekennzeichnet, dass** außerhalb des Bildbereichs erster Art Bildpunkte ermittelt werden, deren Helligkeitswerte in dem festgelegten Helligkeitswertebereich, deren Sättigungswerte in dem festgelegten Sättigungswertebereich und deren Farbtonwerte in dem festgelegten Farbtonwertebereich liegen, und
die Farben dieser ermittelten Bildpunkte der ersten Farbklasse zugeordnet werden.

5. Verfahren nach einem der vorhergehenden Ansprüche, **dadurch gekennzeichnet, dass** mindestens ein Bildbereich dritter Art ausgewählt wird, von dem bakannt ist, dass er einem Bereich der Vorlage entspricht, der Nutzzeichen, aber keine Störzeichen enthält, und
die Farben derjenigen Bildpunkte des Bildbereichs dritter Art, die nicht der ersten Farbklasse zugeordnet sind, einer dritten Farbklasse von auf die Nutzzeichen bezogenen Farben zugeordnet werden.

6. Verfahren nach Anspruch 5, **dadurch gekennzeichnet, dass** ein mittlerer Helligkeitswert der Bildpunkte des Bildbereichs zweiter Art ermittelt wird,
auf Grundlage des mittleren Helligkeitswertes der Bildpunkte des Bildbereichs zweiter Art ein weiterer Helligkeitswertebereich festgelegt wird und
die Farben derjenigen Bildpunkte des Bildbereichs dritter Art, die nicht der ersten Farbklasse zugeordnet sind, nur dann der dritten Farbklasse zugeordnet werden, wenn die Helligkeitswerte dieser Bildpunkte in dem weiteren Helligkeitswertebereich liegen.

7. Verfahren nach Anspruch 6, **dadurch gekennzeichnet, dass** der weitere Helligkeitswertebereich so festgelegt wird, dass seine Helligkeitswerte H folgende Bedingung (2) erfüllen:

$$H < H_{Mittel} - q \qquad (2),$$

worin $H_{Mittel}$ den mittleren Helligkeitswert und q eine von dem mittleren Helligkeitswert abhängige Größe bezeichnet.

8. Verfahren nach Anspruch 7, **dadurch gekennzeichnet, dass** die von dem mittleren Helligkeitswert abhängige Größe q folgende Beziehung (3) erfüllt:

$$q = 0,1 \times H_{Mittel} \qquad (3),$$

9. Verfahren nach einem der vorgehenden Ansprüche, **dadurch gekennzeichnet, dass**
das Verfahren in einem ersten Schritt zunächst auf eine erste mit Störzeichen und Nutzzeichen versehene erste Vorlage angewendet wird, um der ersten Farbklasse die auf die Störzeichen der ersten Vorlage bezogenen Farben zuzuordnen, und
das Verfahren anschließend in einem zweiten Schritt auf mindestens eine weitere, zweite Vorlage angewendet wird, um der ersten Farbklasse die auf die Störzeichen der zweiten Vorlage bezogenen Farben hinzuzufügen.

10. Verfahren nach Anspruch 9, **dadurch gekennzeichnet, dass**
das Verfahren in einem dritten Schritt wieder auf die erste Vorlage angewendet wird, um der zweiten Farbklasse die auf die zeichenlose erste Vorlage bezogenen Farben zuzuordnen, und
das Verfahren anschließend in einem vierten Schritt wieder auf die zweite Vorlage angewendet wird, um der zweiten Farbklasse die auf die zeichenlose zweite Vorlage bezogenen Farben hinzuzufügen.

**11.** Verfahren nach Anspruch 10 und einem der Ansprüche 5 bis 8, **dadurch gekennzeichnet, dass**
das Verfahren in einem fünften Schritt wieder auf die erste Vorlage angewendet wird, um der dritten Farbklasse die auf die Nutzzeichen der ersten Vorlage bezogenen Farben zuzuordnen, und
das Verfahren anschließend in einem sechsten Schritt wieder auf die zweite Vorlage angewendet wird, um der dritten Farbklasse die auf die Nutzzeichen der zweiten Vorlage bezogenen Farben hinzuzufügen.

**12.** Verfahren nach einem der Ansprüche 9 bis 11, **dadurch gekennzeichnet, dass** auf Grundlage zumindest der ersten oder der dritten Farbklasse die Filtereigenschaften eines Farbfilters festgelegt werden, das in einer automatischen Zeichenerkennung einsetzbar ist, um die auf die Störzeichen bezogenen Information von der auf die Nutzzeichen bezogenen Information zu trennen.

**13.** Verfahren nach Anspruch 12, **dadurch gekennzeichnet, dass** die Filtereigenschaften des Farbfilters auch auf Grundlage der zweiten Farbklasse festgelegt werden.

**14.** Einrichtung zum Verarbeiten der Farbinformation einer mit Störzeichen und Nutzzeichen versehenen Vorlage zur Vorbereitung einer Farbfilterung, wobei
ein digitales Bild der Vorlage erzeugt wird, das aus Bildpunkten besteht, deren Farbe jeweils durch einen Helligkeitswert, einen Sättigungswert und einen Farbtonwert festgelegt ist,
mindestens ein Bildbereich erster Art ausgewählt wird, von dem bekannt ist, dass er einem Bereich der Vorlage entspricht, der Störzeichen, aber keine Nutzzeichen enthält,
auf Grundlage der Helligkeitswerte der Bildpunkte des Bildbereichs erster Art ein Helligkeitswertebereich festgelegt wird, von dem angenommen wird, dass er die Helligkeitswerte der auf die Störzeichen bezogenen Bildpunkte enthält,
für die Sättigungswerte derjenigen Bildpunkte des Bildbereichs erster Art, deren Helligkeitswerte in dem festgelegten Helligkeitswertebereich liegen, jeweils die Häufigkeit ermittelt wird, mit der diese Sättigungswerte in dem Bildbereich erster Art auftreten,
auf Grundlage derjenigen Sättigungswerte, deren ermittelte Häufigkeit einen vorbestimmten Wert übersteigt, ein diese Sättigungswerte enthaltender Sättigungswertebereich festgelegt wird,
für die Farbtonwerte derjenigen Bildpunkte des Bildbereichs erster Art, deren Helligkeitswerte in dem festgelegten Helligkeitswertebereich liegen, jeweils die Häufigkeit ermittelt wird, mit der diese Farbtonwertewerte in dem Bildbereich erster Art auftreten,
auf Grundlage derjenigen Farbtonwerte, deren ermittelte Häufigkeit einen vorbestimmten Wert übersteigt, ein diese Farbtonwerte enthaltender Farbtonwertebereich festgelegt wird,
die Farben derjenigen Bildpunkte des Bildbereichs erster Art, deren Helligkeitswerte in dem festgelegten Helligkeitswertebereich, deren Sättigungswerte in dem festgelegten Sättigungswertebereich und deren Farbtonwerte in dem festgelegten Farbtonwertebereich liegen, einer ersten Farbklasse von auf die Störzeichen bezogenen Farben zugeordnet werden,
die Farben derjenigen Bildpunkte des Bildbereichs erster Art, die nicht der ersten Farbklasse zugeordnet sind, einer zweiten Farbklasse von auf die zeichenlose Vorlage bezogenen Farben zugeordnet werden,
mindestens ein Bildbereich zweiter Art ausgewählt wird, von dem bekannt ist, dass er einem Bereich der Vorlage entspricht, der weder Störzeichen noch Nutzzeichen enthält, und
die Farben derjenigen Bildpunkte des Bildbereichs zweiter Art, deren Helligkeitswerte in dem festgelegten Helligkeitswertebereich liegen, deren Sättigungswerte in dem festgelegten Sättigungswertebereich liegen und deren Farbtonwerte in dem festgelegten Farbtonwertebereich liegen, aus der ersten Farbklasse ausgeschlossen und der zweiten Farbklasse zugeordnet werden.

**Claims**

**1.** A method for processing the colour information of a document provided with noise characters and usable characters for preparation of a colour filtering, in which
a digital image of the document is generated that is comprised of image points whose colour is respectively established by a brightness value, a saturation value and a colour tone value,
at least one image region of the first type is selected of which it is known that it corresponds to a region of the document that contains noise characters but no usable characters,
a brightness value range is established on the basis of the brightness values of the image points of the image region of the first type, of which brightness value range it is assumed that it contains the brightness values of the image points corresponding to the noise characters,
for the saturation values of those image points of the image region of the first type whose brightness values lie in the established brightness value range, the frequency with which these saturation values occur in the image region of the first type is respectively determined,

based on those saturation values whose determined frequency exceeds a predetermined value, a saturation value range containing these saturation values is established,

for the colour tone values of those image points of the image region of the first type whose brightness values lie in the established brightness value range, the frequency with which the colour tone values occur in the image region of the first type is respectively determined,

based on those colour tone values whose determined frequency exceeds a predetermined value, a colour tone value range containing these colour tone values is established,

the colours of those image points of the image region of the first type whose brightness values lie in the established brightness value range, whose saturation values lie in the established saturation value range and whose colour tone values lie in the established colour tone value range are associated with a first colour class of colours corresponding to the noise characters,

the colours of those image points of the image region of the first type that are not associated with the first colour class are associated with a second colour class of colours corresponding to the character-less document,

at least one image region of a second type is selected, of which it is known that it corresponds to a region of the document that contains neither noise characters nor usable characters, and

the colours of those image points of the image region of the second type whose brightness values lie in the established brightness value range, whose saturation values lie in the established saturation value range and whose colour tone values lie in the established colour tone value range are excluded from the first colour class and are associated with the second colour class.

2. The method according to claim 1, **characterized in that** the largest brightness value and the smallest brightness value of the image points of the image region of the first type are determined and

the brightness value range is established such that its brightness values H fulfil the following conditions (1):

$$0 < H < H\max - \frac{H\max - H\min}{k} \qquad (1),$$

wherein Hmax designates the largest brightness value, Hmin designates the smallest brightness value and k designates a natural number not equal to zero.

3. The method according to claim 1 or 2, **characterized in that** a frequency distribution of the brightness values, the saturation values and colour tone values is respectively determined for the image points of the image region of the first type whose brightness value ranges lie in the established brightness value range, which frequency distribution specifies the frequency of the respective values in the image region of the first type, and

the frequency distributions are respectively quantized in a predetermined number of stages and are subsequently divided by a predetermined normalization constant.

4. The method according to any of the preceding claims, **characterized in that** image points whose brightness values lie in the established brightness value range, whose saturation values lie in the established saturation value range, and whose colour tone values lie in the established colour tone value range are determined outside of the image region of the first type, and

the colours of these determined image points are associated with the first colour class.

5. The method according to any of the preceding claims, **characterized in that** at least one image region of the third type is selected of which it is known that it corresponds to a region of the document that contains usable characters but no noise characters, and

the colours of those image points of the image region of the third type that are not associated with the first colour class are associated with a third colour class of colours corresponding to the usable characters.

6. The method according to claim 5, **characterized in that** an average brightness value of the image points of the image region of the second type is determined,

a further brightness value range is established on the basis of the average brightness value of the image points of the image region of the second type and

the colours of the those image points of the image region of the third type that are not associated with the first colour class are only associated with the third colour class when the brightness values of these image points lie in the further brightness value range.

7. The method according to claim 6, **characterized in that** the further brightness value range is established such that its brightness values H fulfil the following condition (2):

$$H < H_{Average} - q \qquad\qquad (2),$$

wherein $H_{Average}$ designates the average brightness value and q designates a quantity dependent on the average brightness value.

8. The method according to claim 7, **characterized in that** the quantity q that is dependent on the average brightness value fulfils the following condition (3)

$$q = 0.1 \times H_{Average} \qquad\qquad (3).$$

9. The method according to any of the preceding claims, **characterized in that**
in a first step the method is initially applied to a first document provided with noise characters and usable characters in order to associate the colours corresponding to the noise characters of the first document with the first colour class, and
in a second step the method is subsequently applied to at least one further second document in order to add to the first colour class the colours corresponding to the noise characters of the second colour class.

10. The method according to claim 9, **characterized in that**
in a third step the method is applied again to the first document in order to associate the colours corresponding to the character-less first document with the second colour class, and
in a fourth step the method is subsequently applied again to the second document in order to add to the second colour class the colours corresponding to the character-less second document.

11. The method according to claim 10 and any of the claims 5 to 8, **characterized in that**
in a fifth step the method is applied again to the first document in order to associate the colours corresponding to the usable characters of the first document with the third colour class, and
in a sixth step the method is subsequently applied to the second document in order to add to the third colour class the colours corresponding to the usable characters of the second document.

12. The method according to any of the claims 9 to 11, **characterized in that** the filter properties of a colour filter are established based on at least the first or the third colour class, which colour filter can be used in an automatic character recognition in order to separate the information corresponding to the noise characters from the information corresponding to the usable characters.

13. The method according to claim 12, **characterized in that** the filter properties of the colour filter are also established on the basis of the second colour class.

14. A device for processing of colour information of a document provided with noise characters and usable characters, in which
a digital image of the document is generated that is comprised of image points whose colour is respectively established by a brightness value, a saturation value and a colour tone value,
at least one image region of the first type is selected of which it is known that it corresponds to a region of the document that contains noise characters but no usable characters,
a brightness value range is established on the basis of the brightness values of the image points of the image region of the first type, of which brightness value range it is assumed that it contains the brightness values of the image points corresponding to the noise characters,
for the saturation values of those image points of the image region of the first type whose brightness values lie in the established brightness value range, the frequency with which these saturation values occur in the image region of the first type is respectively determined,

based on those saturation values whose determined frequency exceeds a predetermined value, a saturation value range containing these saturation values is established,

for the colour tone values of those image points of the image region of the first type whose brightness values lie in the established brightness value range, the frequency with which the colour tone values occur in the image region of the first type is respectively determined,

based on those colour tone values whose determined frequency exceeds a predetermined value, a colour tone value range containing these colour tone values is established,

the colours of those image points of the image region of the first type whose brightness values lie in the established brightness value range, whose saturation values lie in the established saturation value range and whose colour tone values lie in the established colour tone value range are associated with a first colour class of colours corresponding to the noise characters,

the colours of those image points of the image region of the first type that are not associated with the first colour class are associated with a second colour class of colours corresponding to the character-less document,

at least one image region of a second type is selected, of which it is known that it corresponds to a region of the document that contains neither noise characters nor usable characters, and

the colours of those image points of the image region of the second type whose brightness values lie in the established brightness value range, whose saturation values lie in the established saturation value range and whose colour tone values lie in the established colour tone value range are excluded from the first colour class and are associated with the second colour class.

### Revendications

**1.** Procédé permettant de traiter les informations chromatiques d'un modèle doté de caractères parasites et de caractères utiles afin de préparer un filtrage de couleurs, dans lequel:

une image numérique du modèle est produite, qui est constituée de points d'image, dont la couleur est respectivement définie par une valeur de luminosité, une valeur de saturation et une valeur de chrominance,

on choisit au moins une zone d'image du premier type, dont on sait qu'elle correspond à une zone du modèle qui contient des caractères parasites, mais pas de caractères utiles,

sur la base des valeurs de luminosité des points d'image de la zone d'image du premier type, on définit une plage de valeurs de luminosité dont on suppose qu'elle contient les valeurs de luminosité des points d'image associés aux caractères parasites,

pour les valeurs de saturation de chacun des points d'image de la zone d'image du premier type, dont les valeurs de luminosité se trouvent dans la plage de valeurs de luminosité définie, on détermine chaque fois la fréquence à laquelle ces valeurs de saturation apparaissent dans la zone d'image du premier type,

sur la base de chacune de ces valeurs de saturation, dont la fréquence obtenue dépasse une valeur prédéterminée, on définit une plage de valeurs de saturation contenant ces valeurs de saturation,

pour les valeurs de chrominance de chacun des points d'image de la zone d'image du premier type dont les valeurs de luminosité se trouvent dans la plage de valeurs de luminosité définie, on détermine à chaque fois la fréquence à laquelle ces valeurs de chrominance apparaissent dans la zone d'image du premier type,

sur la base de chacune des valeurs de chrominance dont la fréquence déterminée dépasse une valeur prédéfinie, on définit une plage de valeurs de chrominance contenant ces valeurs de chrominance,

les couleurs de chacun des points d'image de la zone d'image du premier type, dont les valeurs de luminosité se trouvent dans la plage de valeurs de luminosité définie, dont les valeurs de saturation se trouvent dans la plage de valeurs de saturation définie, et dont les valeurs de chrominance se trouvent dans la plage de valeurs de chrominance définie, sont affectées à une première classe de couleurs associée aux caractères parasites,

les couleurs de chacun des points d'image de la zone d'image du premier type, qui ne sont pas affectées à la première classe de couleurs, sont affectées à une deuxième classe de couleurs associée au modèle exempt de caractères,

on choisit au moins une zone d'image du deuxième type dont on sait qu'elle correspond à une zone du modèle qui ne contient ni caractères parasites ni caractères utiles, et

les couleurs de chacun des points d'image de la zone d'image du deuxième type, dont les valeurs de luminosité se trouvent dans la plage de valeurs de luminosité définie, dont les valeurs de saturation se trouvent dans la plage de valeurs de saturation définie, et dont les valeurs de chrominance se trouvent dans la plage de valeurs de chrominance définie, sont exclues de là première classe de couleurs et affectées à la deuxième classe de couleurs.

2. Procédé selon la revendication 1, **caractérisé en ce que** la valeur de luminosité maximale et la valeur de luminosité minimale des points d'image de la zone d'image du premier type sont déterminées, et
la plage de valeurs de luminosité est définie de telle sorte que ses valeurs de luminosité H remplissent les conditions suivantes (1):

$$0 < H < H_{max} - \frac{H_{max} - H_{min}}{k} \qquad\qquad (1)$$

où Hmax caractérise la valeur de luminosité maximale, Hmin la valeur de luminosité minimale, et k est un nombre entier différent de zéro.

3. Procédé selon l'une quelconque des revendications 1 ou 2, **caractérisé en ce que**, pour les points d'image de la zone d'image du premier type, dont les valeurs de luminosité se trouvent dans la plage de valeurs de luminosité définie, on détermine chaque fois une répartition de fréquences des valeurs de luminosité, des valeurs de saturation et des valeurs de chrominance, qui indique la fréquence des valeurs respectives dans la zone d'image du premier type, et
les répartitions de fréquences sont respectivement quantifiées en un nombre prédéfini d'étapes, puis divisées par une constante de normalisation prédéterminée.

4. Procédé selon l'une quelconque des revendications précédentes, **caractérisé en ce que**, en dehors de la zone d'image du premier type, on détermine les points d'image dont les valeurs de luminosité se trouvent dans la plage de valeurs de luminosité définie, dont les valeurs de saturation se trouvent dans la plage de valeurs de saturation définie, et dont les valeurs de chrominance se trouvent dans la plage de valeurs de chrominance définie, et
les couleurs de ces points d'image déterminés sont affectées à la première classe de couleurs.

5. Procédé selon l'une quelconque des revendications précédentes, **caractérisé en ce qu'**on choisit au moins une zone d'image du troisième type dont on sait qu'elle correspond à une zone du modèle qui contient des caractères utiles, mais pas de caractères parasites, et
les couleurs de chacun des points d'image de la zone d'image du troisième type, qui ne sont pas affectées à la première classe de couleurs, sont affectées à une troisième classe de couleurs associée aux caractères utiles.

6. Procédé selon la revendication 5, **caractérisé en ce qu'**on détermine une valeur de luminosité moyenne des points d'image de la zone d'image du deuxième type,
sur la base de la valeur de luminosité moyenne des points d'image de la zone d'image du deuxième type, on définit une plage de valeurs de luminosité supplémentaire et
les couleurs de chacun des points d'image de la zone d'image du troisième type qui ne sont pas affectées à la première classe de couleurs sont alors uniquement affectées à la troisième classe de couleurs lorsque les valeurs de luminosité de ces points d'image se trouvent dans la plage de valeurs de luminosité supplémentaire.

7. Procédé selon la revendication 6, **caractérisé en ce que** la plage de valeurs de luminosité supplémentaire est définie de telle sorte que ses valeurs de luminosité H remplissent la condition suivante (2) :

$$H < H_{Moyenne} - q \qquad\qquad (2)$$

où $H_{Moyenne}$ caractérise la valeur de luminosité moyenne et q est une grandeur dépendante de la valeur de luminosité moyenne.

8. Procédé selon la revendication 7, **caractérisé en ce que** la grandeur q, dépendante de la valeur de luminosité moyenne, satisfait à la formule suivante (3) :

$$q = 0,1 \times H_{Moyenne} \qquad\qquad (3).$$

**9.** Procédé selon l'une quelconque des revendications précédentes, **caractérisé en ce que**:

le procédé est tout d'abord utilisé dans une première étape sur un premier modèle doté de caractères parasites et de caractères utiles, afin d'affecter à la première classe de couleurs les couleurs associées aux caractères parasites du premier modèle, et

le procédé est ensuite utilisé dans une deuxième étape sur au moins un deuxième modèle supplémentaire afin d'ajouter à la première classe de couleurs les couleurs associées aux caractères parasites du deuxième modèle.

**10.** Procédé selon la revendication 9, **caractérisé en ce que**:

le procédé, dans une troisième étape, est de nouveau utilisé sur le premier modèle, afin d'affecter à la deuxième classe de couleurs les couleurs associées au premier modèle exempt de caractères, et

le procédé est ensuite utilisé, dans une quatrième étape, de nouveau sur le deuxième modèle, afin d'ajouter à la deuxième classe de couleurs les couleurs associées au deuxième modèle, exempt de caractères.

**11.** Procédé selon la revendication 10 et selon l'une quelconque des revendications 5 à 8, **caractérisé en ce que**:

le procédé est utilisé, dans une cinquième étape, de nouveau sur le premier modèle, afin d'affecter à la troisième classe de couleurs les couleurs associées aux caractères utiles du premier modèle, et

le procédé est ensuite utilisé, dans une sixième étape, de nouveau sur le deuxième modèle, afin d'ajouter à la troisième classe de couleurs les couleurs associées aux caractères utiles du deuxième modèle.

**12.** Procédé selon l'une quelconque des revendications 9 à 11, **caractérisé en ce que**, sur la base d'au moins la première classe de couleurs ou la troisième classe de couleurs, les propriétés de filtrage d'un filtre chromatique sont définies, lequel peut être utilisé dans une reconnaissance de caractères automatique, afin de séparer les informations associées aux caractères parasites des informations associées aux caractères utiles.

**13.** Procédé selon la revendication 12, **caractérisé en ce que** les propriétés du filtre chromatique sont définies sur la base de la deuxième classe de couleurs.

**14.** Dispositif permettant de traiter les informations chromatiques d'un modèle doté de caractères parasites et de caractères utiles afin de préparer un filtrage des couleurs, dans lequel:

une image numérique du modèle est produite, laquelle est constituée de points d'image dont la couleur est respectivement définie par une valeur de luminosité, une valeur de saturation et une valeur de chrominance,

on choisit au moins une zone d'image du premier type dont on sait qu'elle correspond à une zone du modèle qui contient des caractères parasites mais pas de caractères utiles,

sur la base des valeurs de luminosité des points d'image de la zone d'image du premier type, on définit une plage de valeurs de luminosité dont on suppose qu'elle contient les valeurs de luminosité des points d'image associés aux caractères parasites,

pour les valeurs de saturation de chacun des points d'image de la zone d'image du premier type dont les valeurs de luminosité se trouvent dans la plage de valeurs de luminosité définie, on détermine chaque fois la fréquence à laquelle ces valeurs de saturation apparaissent dans la zone d'image du premier type,

sur la base de chacune des valeurs de saturation dont la fréquence déterminée dépasse une valeur prédéterminée, on définit une plage de valeurs de saturation contenant ces valeurs de saturation,

pour les valeurs de chrominance de chacun des points d'image de la zone d'image du premier type dont les valeurs de luminosité se trouvent dans la plage de valeurs de luminosité définie, on détermine à chaque fois la fréquence à laquelle ces valeurs de chrominance apparaissent dans la zone d'image du premier type,

sur la base de chacune des valeurs de chrominance dont la fréquence déterminée dépasse une valeur prédéfinie, on définit une plage de valeurs de chrominance contenant ces valeurs de chrominance,

les couleurs de chacun des points d'image de la zone d'image du premier type dont les valeurs de luminosité se trouvent dans la plage de valeurs de luminosité définie, dont les valeurs de saturation se trouvent dans la plage de valeurs de saturation définie, et dont les valeurs de chrominance se trouvent dans la plage de valeurs de chrominance définie, sont affectées à une première classe de couleurs associées aux caractères parasites,

les couleurs de chacun des points d'image de la zone d'image du premier type, qui ne sont pas affectées à la première classe de couleurs, sont affectées à une deuxième classe de couleurs associée au modèle exempt de caractères,

on choisit au moins une zone d'image du deuxième type dont on sait qu'elle correspond à une zone du modèle qui ne contient ni caractères parasites ni caractères utiles, et
les couleurs de chacun des points d'image de la zone d'image du deuxième type, dont les valeurs de luminosité se trouvent dans la plage de valeurs de luminosité définie, dont les valeurs de saturation se trouvent dans la plage de valeurs de saturation définie, et dont les valeurs de chrominance se trouvent dans la plage de valeurs de chrominance définie, sont exclues de la première classe de couleurs et sont affectées à la deuxième classe de couleurs.

# Fig. 1

Start

Bildbereich erster Art auswählen — S2

Helligkeitswertebereich festlegen — S4

Sättigungswertebereich festlegen — S6

Farbtonwertebereich festlegen — S8

Farben der ersten Farbklasse zuordnen — S10

außerhalb des Bildbereichs erster Art nach
Farben für die erste Farbklasse suchen — S12

Bildbereich zweiter Art auswählen — S14

Farben aus erster Farbklasse ausschließen
und zweiter Farbklasse zuordnen — S16

mittleren Helligkeitswert berechnen — S18

Bildbereich dritter Art auswählen — S20

weiteren Helligkeitswertebereich festlegen — S22

Farben der dritten Farbklasse zuordnen — S24

Ende

Fig. 2

**Fig. 3**

```
                    ┌─────────┐
                    │  Start  │
                    └─────────┘
                         │
                    ┌─────────┐
                    │  n = 1  │─────────⌇───── S30
                    └─────────┘
                         │
                         │
                    ┌─────────┐
              ──────→│  j = 1  │─────────⌇───── S32
              │      └─────────┘
              │           │
              │           │
              │    ┌──────────────────┐
              │ ──→│ Verfahren auf j-tes│
              │ │  │ Formular anwenden, │──⌇──── S34
              │ │  │   m-te Farbklasse  │
              │ │  └──────────────────┘
              │ │          │
              │ │   nein   ╱╲
              │ │ ┌──────┐╱    ╲
              │ └─│j → j+1│ j = m ? ⌇───── S36
              │   └──────┘╲    ╱
              │     S38    ╲╱
              │             │ ja
              │     nein   ╱╲
              │   ┌──────┐╱    ╲
              └───│n → n+1│ n = 3 ? ⌇───── S40
                  └──────┘╲    ╱
                    S42    ╲╱
                            │ ja
                       ┌─────────┐
                       │  Ende   │
                       └─────────┘
```